# EUROPEAN PATENT APPLICATION

(11) **EP 0 848 554 A2**
(43) Date of publication of application: **17.06.1998**
(21) Application number: 97309853.6
(22) Date of filing: 08.12.1997
(51) Int. Cl.: H04N 7/173

(54) **Accessing television program information**

(30) Priority: 11.12.1996 US 764693; 11.12.1996 US 764694; 11.12.1996 US 764695
(71) Applicant: INTERNATIONAL BUSINESS MACHINES CORPORATION, Armonk, NY 10504 (US)
(72) Inventor: Dodson, John Paul, Pflugerville, Texas 78660 (US); Amro, Hatim Yousef, Austin, Texas 78728 (US)
(74) Representative: Davies, Simon Robert

(57) **Abstract**

The present invention relates to a system and method for accessing television program information, particularly context sensitive information, some of which may be found through the Internet. Program information on a television 100 may be interactively displayed by receiving a request for program information; displaying program information 200; receiving a search request for additional information regarding the television program; generating at least one automatic search term for a search for the additional information regarding the program, the at least one search term being displayed overlaid on a program being received by the television 300; searching the Internet for the requested information; obtaining a result of the search; and saving the result in a memory 102 coupled with the television.

## Description

The present invention relates to a system and method for accessing television program information, and is particularly appropriate for accessing context sensitive information, potentially through the Internet.

Television program information can now be found displayed on the TV. However, the current ITV (Interactive TeleVision) model continues the old static T.V. model of centralized channel information. Channel information typically includes program start and stop times, program title and description.

Many current ITV systems utilize a set-top box working in conjunction with set-top software, and possibly a remote control. Set-top boxes have been used in various systems, including for table television, direct to home (DTH) video dial tone, and wireless cabled (MMDS). A set-top box can be coupled with a television set and may be used in conjunction with a remote control. The components of a typical set-top box may include a controller, a memory, a receiver for the remote control, and possibly an interface for the TV.

An example of the conventional ITV model is the "Prevue channel". All channel information is in one place. This can be awkward and frustrating to the viewer. For instance, the user may have to wait for a considerable amount of time to view information for a certain channel. Channel information for a specific channel may not be immediately available, since only a small number of channels are displayed at a given time. One limitation of the conventional program information services is that only the most basic information is typically provided. If the viewer desires to see other information related to a program, such as movie reviews or interviews with the writer of the program, the viewer is typically required to research the desired additional information elsewhere.

Accordingly, the invention provides a method for interactively accessing program information on a television, the method comprising:
a) receiving a search request regarding a television program;
b) generating at least one automatic search term regarding the television program based upon the search request; and
c) searching an on-line service based upon the automatic search term for the requested information.

In a preferred embodiment, the search terms are displayed on the television, overlaid on the current program, and may be edited, for example by adding, deleting or changing one of the terms. After the search has been performed, typically using the Internet, a list of at least one hit returned from the on-line search is displayed, and each hit on the list is selectable to display text such as a program review associated with it. The result of the search or selected information therefrom can be saved in a memory coupled with the television, and then subsequently retrieved and displayed.

Also in the preferred embodiment, the at least one automatic search term may be related to a current program on the television, or to a program to be received on a selected channel on the television (the selected channel being selected by tuning into the channel on the television), for example the program which will be received next on the selected channel on the television.

The method preferably further comprises the initial step of displaying program information, such as any desired combination from program name, program start time, program end time, a name of an actor acting in the program, and a name of a director who directed the program, with the search request being received responsive to said display of program information, and the at least one automatic search term being based upon said program information.

In the preferred embodiment the search request is sent by selection of a key on a remote control, and the operation to find information may be terminated by making a cancel request, typically again sent by selection of an appropriate key on a remote control. Alternatively, the search or cancel request can be input by selecting a corresponding option displayed on the television.

The invention also provides a method for interactively displaying program information on a television, the method comprising:
receiving a search request regarding a television program;
displaying at least one search term overlaid onto a program being received by the television; and
searching an on-line service based upon the at least one search term for the requested information.

It will be appreciated that this method may also include many of the preferred features described above.

The invention further provides a system for interactively accessing program information on a television, the system comprising:
means for receiving a search request regarding a television program;
means for generating at least one automatic search term regarding the television program based upon the search request; and
means for searching an on-line service based upon the automatic search term for the requested information.

Such a system typically further comprises a television; an input device for inputting information; a receiver for receiving the information inputted from the input device; an interface for accessing an on-line service; and a controller coupled to the television, the receiver, and the interface for processing input inputted by the input device, said controller including the means for receiving a search request, the means for generating at least one automatic search term, and the means for searching.

The invention further provides a computer readable medium containing program instructions for interactively displaying program information on a television, the program instructions comprising:
a) receiving a search request regarding a television program;
b) generating at least one automatic search term regarding the television program based upon the search request; and
c) searching an on-line service based upon the automatic search term for the requested information.

Viewed from another aspect the invention provides a method for interactively displaying program information on a television, the method comprising the steps of:
a) displaying program information;
b) receiving a request for additional information; and
c) generating at least one automatic search term responsive to the request for a search for the additional information.

In a preferred embodiment, the at least one automatic search term includes information regarding a program currently being shown, or information regarding a program to be shown on the current channel. The request for additional information is received by selection of an option displayed on the television.

Viewed from another aspect, the invention provides a system for interactively displaying program information on a television, the system comprising:
a television;
an input device for inputting information;
a receiver for receiving the information inputted from the input device;
an interface for accessing an on-line service; and
a controller coupled to the television, the receiver, and the interface for processing input inputted by the input device, for receiving a request for program information, for displaying program information, for receiving a request for additional information and generating at least one automatic search term for a search for the additional information responsive to the request for additional information.

Viewed from yet another aspect, the invention provides a method for interactively accessing program information on a television, the method comprising:
a) receiving a search request;
b) generating at least one automatic search term regarding a program for television based upon the search request; and
c) searching an on-line service based upon the automatic search term for requested information.

Viewed from yet another aspect the invention provides a system for interactively accessing program information on a television, the system comprising:
a television;
an input device for inputting information;
a receiver for receiving the information inputted from the input device;
an interface for accessing an on-line service; and
a controller coupled to the television, the receiver, and the interface for processing input inputted by the input device, for receiving a search request, for generating at least one automatic search term regarding a program for television, and for searching an on-line service for requested information in response to the search request.

Viewed from yet another aspect the invention provides a method for interactively accessing program information on a television, the method comprising:
a) receiving a search request regarding a television program;
b) displaying at least one search term overlaid on a program being received by the television;
c) searching the Internet for requested information;
d) obtaining a result of the search; and
e) saving the result in a memory coupled with the television.

Viewed from yet another aspect the invention provides a system for interactively accessing program information on a television, the system comprising:
a television;
an input device for inputting information;
a receiver for receiving the information inputted from the input device;
a memory;
an internet interface for accessing the internet; and
a controller coupled to the television, the receiver, the memory, and the internet interface for processing input inputted by the input device, for receiving a search request regarding a television program, for displaying at least one search term overlaid on a program being received by the television, for searching the Internet for requested information, for obtaining a result of the search, and for saving the result in the memory coupled with the television.

Thus the methods described above, plus corresponding systems and sets of computer program instructions, can be used for interactively accessing television program information. This is particularly beneficial for providing context sensitive information (ie information especially targeted at the current context of the user, such as the program that he or she is currently watching). The information is typically provided found through on-line services, examples of which include America On Line and the Internet.

Thus a system and method are provided for accessing television program information, particularly context sensitive information, some of which may be found through the Internet.

An embodiment of the invention will now be described in detail by way of example only with reference to the following drawings:

Figure 1 is a schematic diagram of a set top box system with Internet interface.

Figure 2 is an example of an interactive content specific dialog overlaid onto a program being received by a TV.

Figure 3 is an interactive dialog overlaid onto a program in response to a search request.

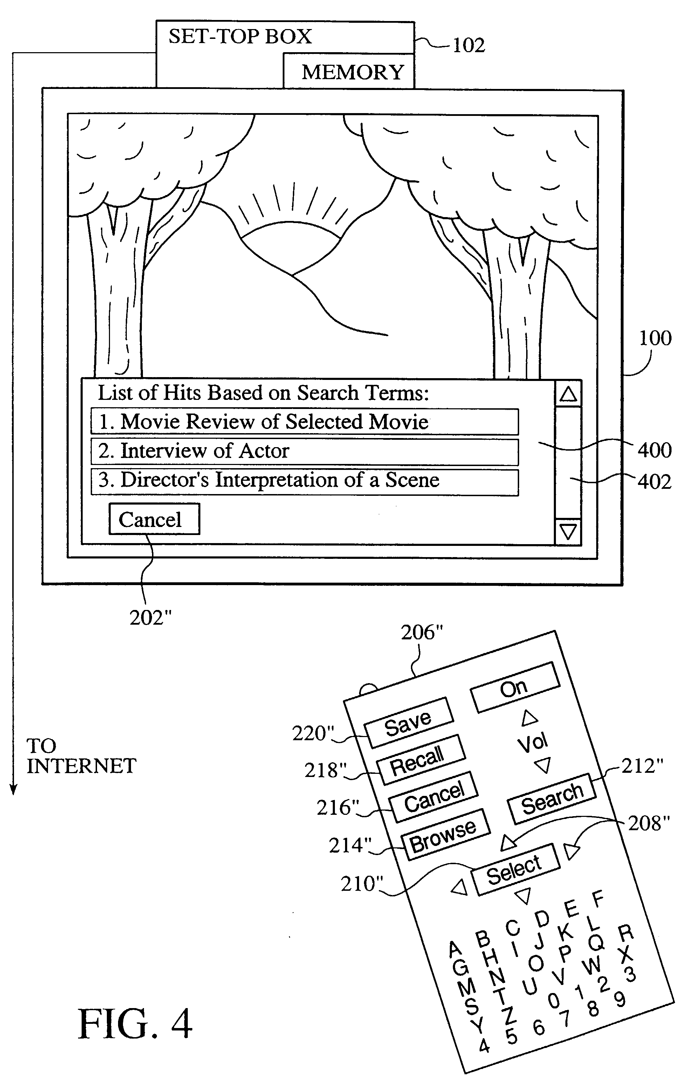

Figure 4 is an example of an interactive dialog displaying a list of hits based on search terms.

Figure 5 is an example of an interactive dialog of text related to a selected hit resulting from a search.

Figure 6 is a flow diagram of a method for interactively displaying context sensitive text overlaid onto a program.

Figure 7 is a flow diagram of a method for interactively retrieving context sensitive information and displaying the results on the television overlaid onto a program.

Figure 8 is a flow diagram of a method for saving context sensitive information retrieved from the Internet in a memory coupled to the TV.

Figure 9 is a flow diagram of a method for recalling saved context sensitive information and displaying the recalled information onto the TV.

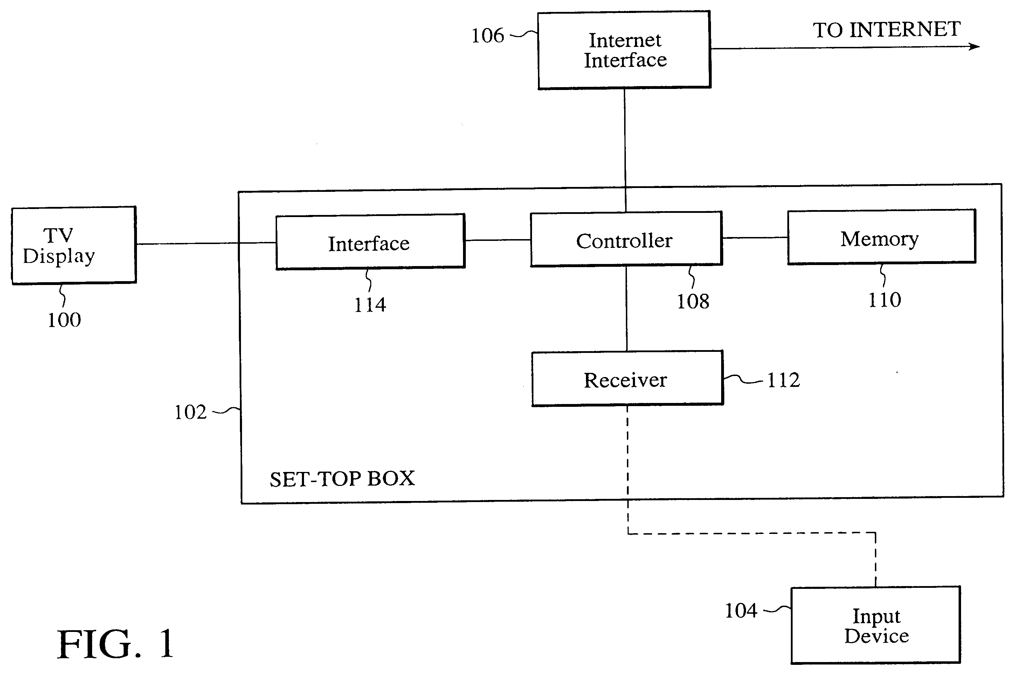

Figure 1 is a system for accessing television program information, particularly context sensitive information, some of which may be found through on-line services, examples of which include America On Line and the Internet. It includes a TV display 100, a set-top box 102, an input device 104, and an Internet interface 106 which may be located either inside or outside the set-top box. The basic components of the set-top box 102 include an interface 114, a controller 108, a memory 110, and a receiver 112. The input device 104 may be any type of input device including a TV remote control or a keyboard. The receiver 112 would receive input from the input device 104. The controller 108 utilizes the input received by the receiver 112 and can access the memory 112, the Internet interface 106, and the interface 114, as required.

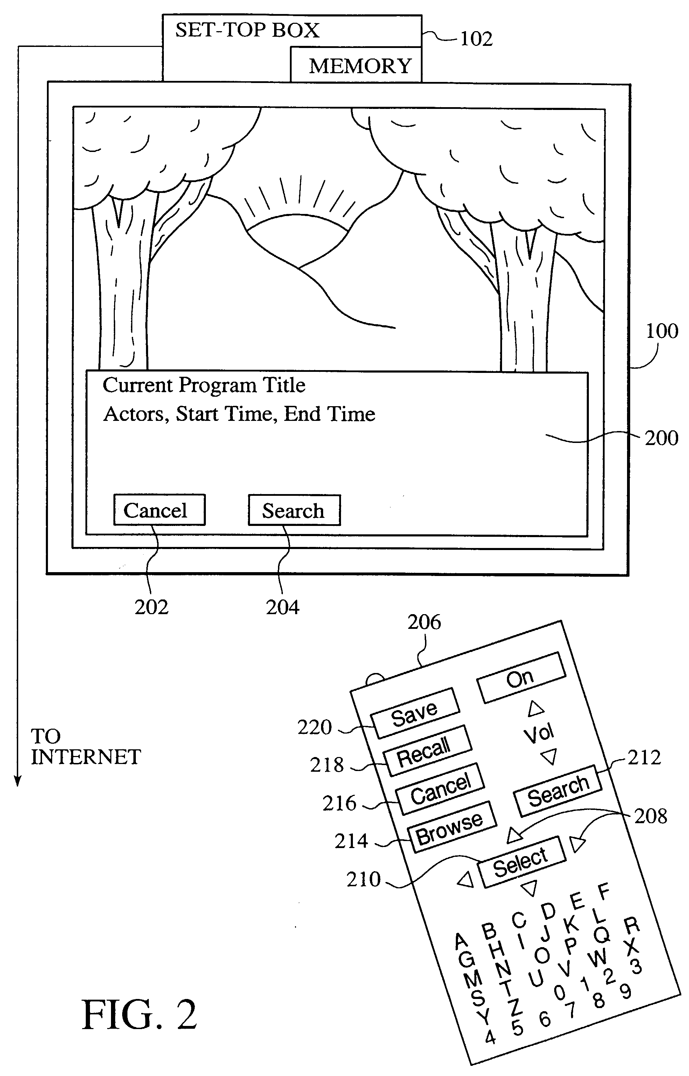

Figure 2 is an example of context-sensitive program information displayed on the TV display overlaid onto a program. Examples of context sensitive program information include current program title, the actors starring in the program, the start time, and the end time. This overlay 200 preferably appears when requested by a user.

The request can be made through the use of an input device 206 such as a remote control. The input device 206 preferably includes an overlay request such as a browse button 214. The overlay 200 can be cancelled or a search can be requested from the overlay 200. The overlay 200 includes a cancel indicator 202 and a search indicator 204 which can be selected by using the input device 206. The cancel and search functions can either be displayed and selected from the overlay 200, or cancel 216 and search 212 buttons may be included in the input device 216.

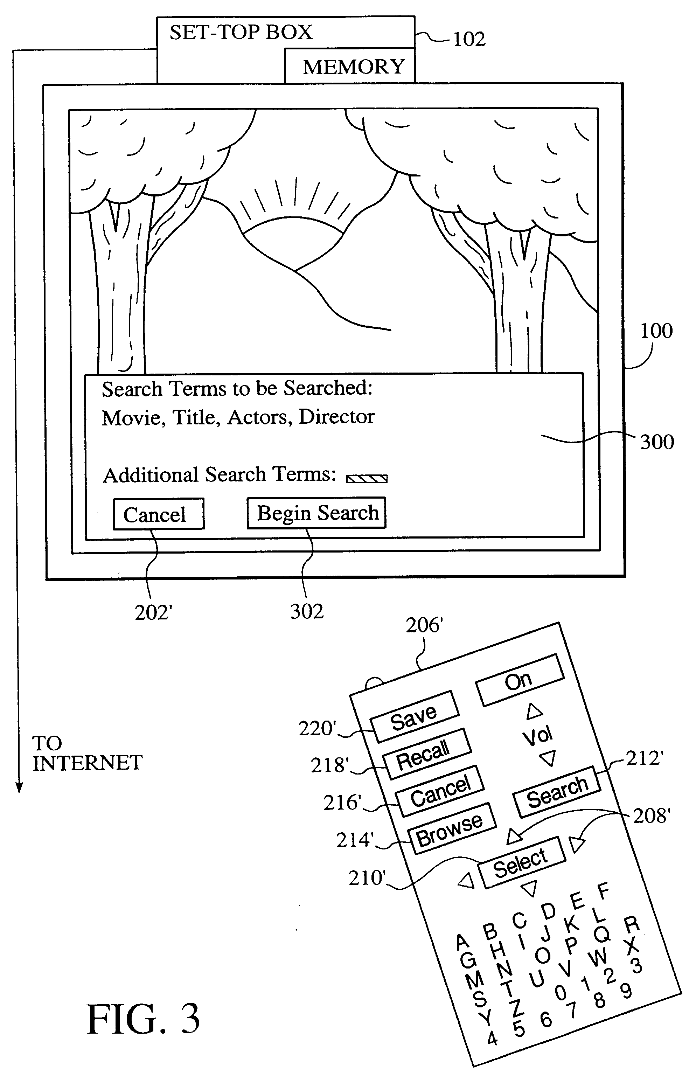

If the search 204 is selected, a new overlay 300 appears which can be seen in Figure 3. The overlay 300 preferably includes automatic search terms to be searched, such as the movie title, actors, and the director. The automatic search terms can be derived in various ways. One way is to access a program guide database maintained by a program guide provider such as a cable company. The database can be directly accessed at the cable company's location by using such devices as the Internet interface 106 shown in Figure 1, or a telephone line. If a current program guide is maintained in a database located in a set-top box, then the program guide can be accessed in the set-top box. The desired channel information is preferably assumed to be the current channel being displayed on the TV, and the assumed time is preferably the current time or a short time in the future such as half an hour. The information associated with that channel and time can be retrieved from the program guide database and displayed as the automatic search terms. In this manner, both the information overlaid on the program on the TV and the automatic search terms used for Internet search can be generated.

Search terms can be erased or added prior to beginning the search. The automatic search terms preferably either relate to the program currently being watched or a program which is to be watched in the future. One way the user can search a program to be watched in the future is to erase the automatic search terms and add additional search terms. The search function can be cancelled at any time by use of selection of the cancel option 202', or alternatively, by pressing a cancel button 216' in an input device. The user can also begin search by selecting the begin search option 302, or alternatively, by pressing the search button 212' on the input device 206'.

If the user elects to begin search, a new overlay 400 appears over the program. The overlay 400 includes a list of hits based on the search terms. Examples of the list of hits may include movie reviews of the selected movie, interviews with the actors, and directors' interpretation of a particular scene in a movie. A user may view the list of hits and decide to cancel the overlay 400 and return to the program, or the user may select one of the hits to view the text associated with the hit.

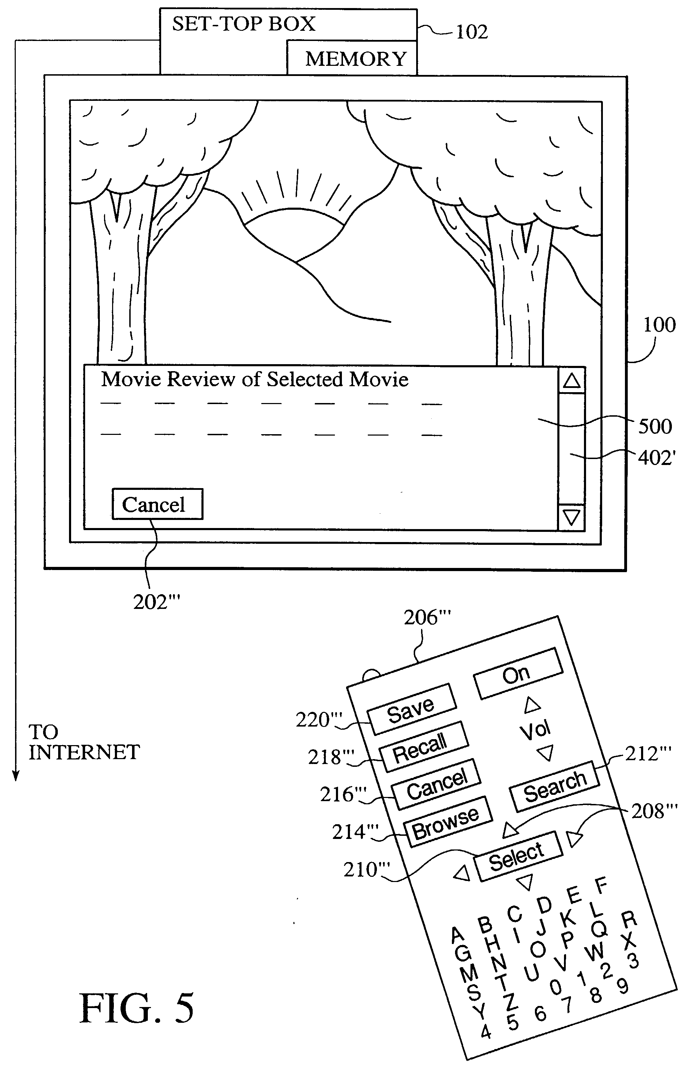

Figure 5 illustrates an example of an overlay 500 which appears when a hit is selected. An example of a hit which was selected may be the movie review of a selected movie. The overlay 500 may include a scroll bar 402' which allows the user to scroll up and down the text. Again, the overlay 500 may be cancelled at any time, via the cancel selection 202''' or a cancel button 216''' on the input device.

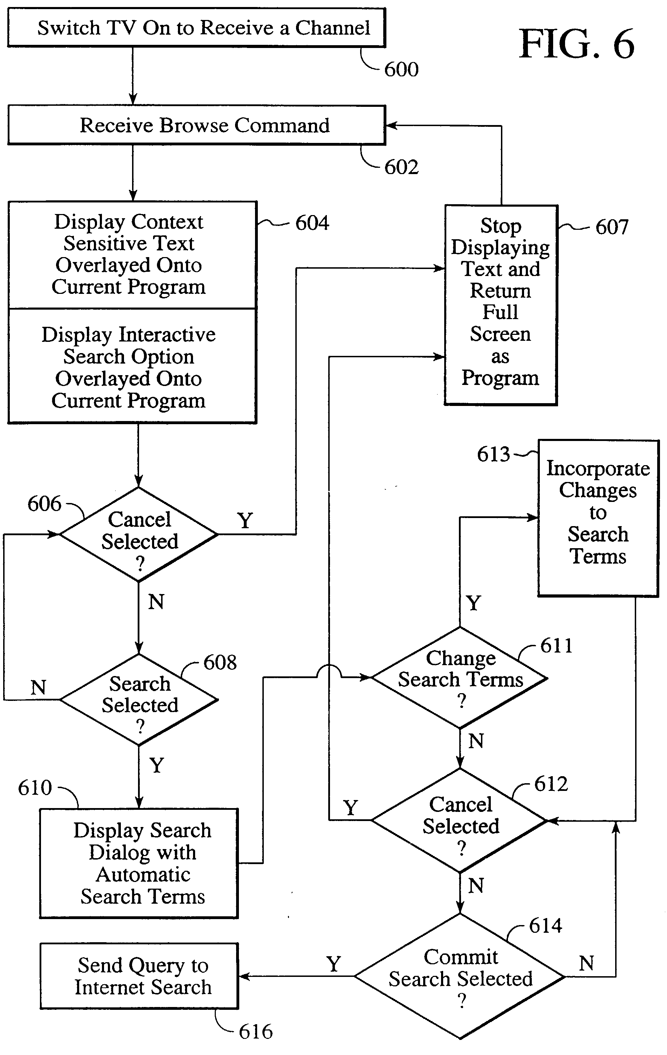

Figure 6 is a flow diagram of a method according to the present invention for displaying context sensitive text overlaid onto a current program. A television is turned on to receive a television channel via step 600. Then a browse command is received via step 602. A browse command includes any type of command which requests information. Then context sensitive text is displayed overlaid onto the current program via step 604. Context sensitive text can include text describing programs such as the current program on the current channel, or a future program on the current channel.

An interactive search option can also be displayed via step 604. It is determined if a cancel option has been selected via step 606. If so, then the text is no longer displayed and the current program is returned to the full screen. If, however, a cancel option has not been selected, then it is determined if a search option has been selected, via step 608. If no search option has been selected, it is again determined if a cancel option has been selected via step 606.

If a search option has been selected, then a search dialog is displayed via step 610. The search dialog preferably includes search terms which are automatically selected in the manner previously described. The search dialog also includes options for changing, deleting, or adding search terms. It is then determined if changes are to be made to the search terms via step 611. If so, then changes entered through the input device are incorporated into the search terms via step 613.

It is again determined if a cancel option has been selected via step 612. If so, then the text is no longer displayed and the current program is returned to the full screen via step 607.

If a cancel option has not been selected via step 612, then it is determined if a commit search option has been selected via step 614. The commit search option includes any input which indicates that the search is to proceed. If no commit search option has been selected, then it is again determined if a cancel option has been selected via step 612.

If, however, a commit search option has been selected via step 614, then a query is sent to search the Internet via step 616. This query includes the final set of search terms which has been selected by the user. The final set may include some or all of the automatic search terms in addition to any additional search terms which the user may have selected.

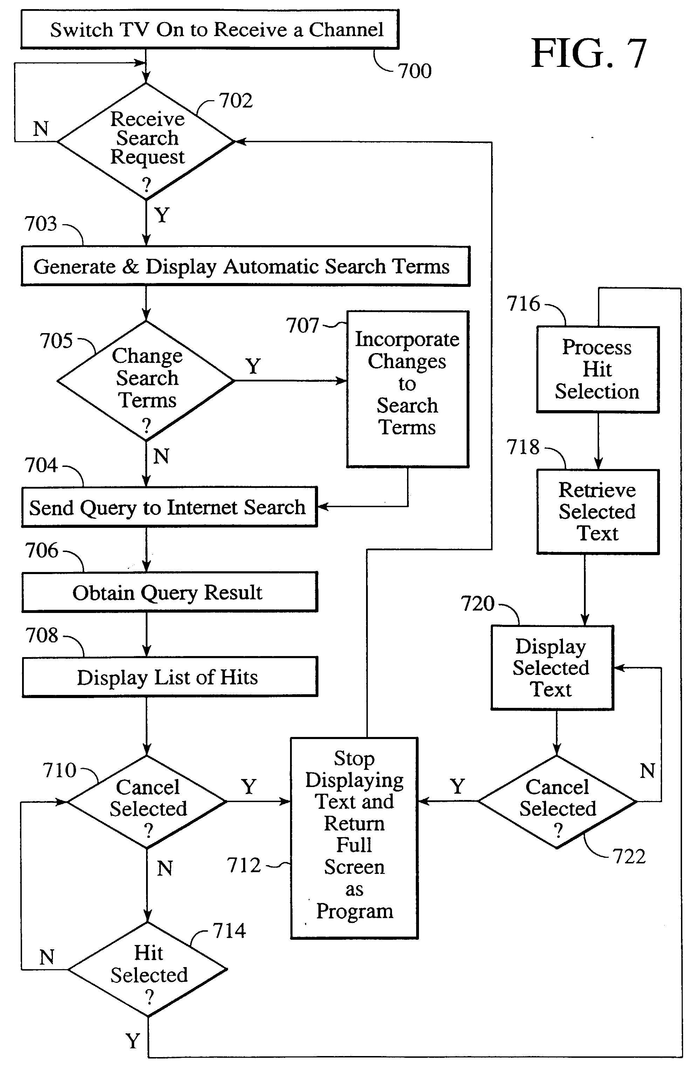

Figure 7 is a flow diagram of a method for retrieving requested information from the Internet to be overlaid onto a program on the television set. The television is switched on to receive a channel via step 700. It is then determined if a search request has been received via step 702. If not, then it is again determined if a search request was received, via step 702.

If a search request has been received, then automatic search terms are generated and displayed via step 703. As previously discussed, the automatic search terms are preferably generated by using information which is being provided by a program guide database by a program guide provider. It is then determined if there are to be any changes to the search terms, such as deletion, addition, or modification of the displayed search terms via step 705. If the user enters changes to the search terms, these changes are incorporated via step 707.

If no changes are to be made, or alternatively, once the changes have been made, a query is sent to the Internet for a search, via step 704. The query can be limited to a program category, such as sports or movies, to limit the number of hits to a reasonable number. The categories can also be generated as an automatic search term, assuming the program guide provider has identified the programs into categories.

The query results are obtained via step 706 and a list of hits is displayed via step 708. It is determined if a cancel option has been selected via step 710. If so, then the displaying of the text is stopped and the program is returned to the full screen via step 712. It is then determined if a new search request has been received via step 702.

If a cancel option has not been selected via step 710, then it is determined if a hit has been selected, via step 714. If not, it is again determined if a cancel option has been selected via step 710. If a hit from the list of hits has been selected via step 714, then the hit selection is processed via step 716. The selected text is then retrieved via step 718 and the selected text is displayed via step 720. If a cancel option has not been selected via step 722, then the selected text is continued to be displayed. However, if a cancel option has been selected, then the text is no longer displayed and the full screen is returned to the program via step 712.

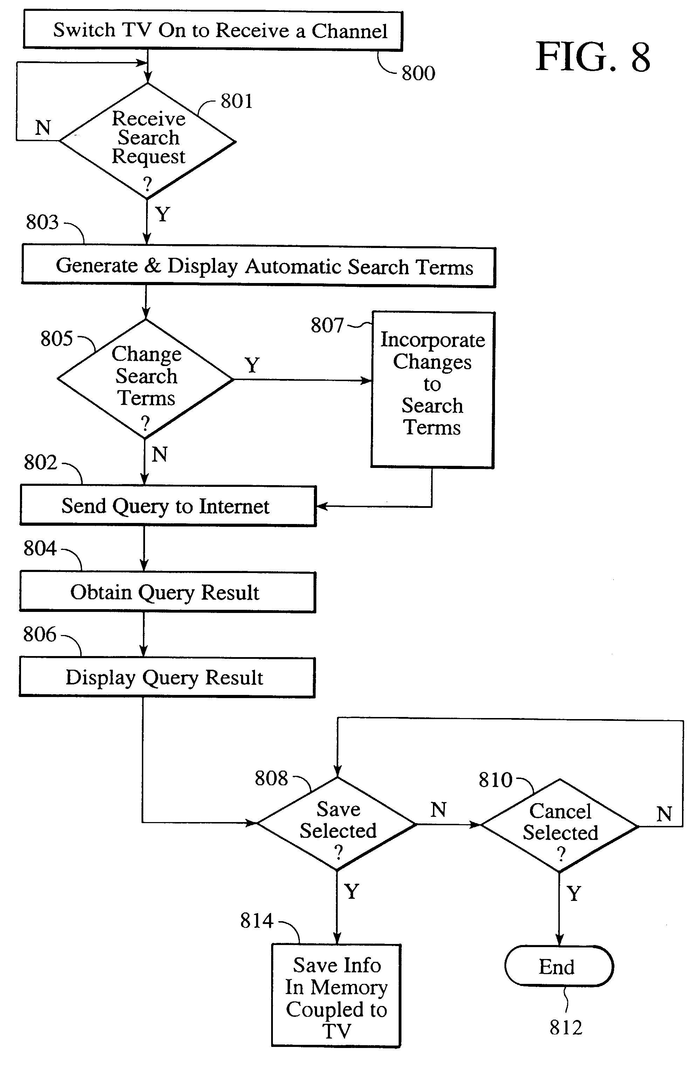

Figure 8 is a flow diagram of a method for saving the results of an Internet search which can be initiated for search terms which are automatically generated. The TV is switched on to receive a channel via step 800. It is determined if a search request has been received via step 801. If not, then it is continually determined if a search request has been received via step 801. When a search request is received, then automatic search terms are generated and displayed via step 803.

It is then determined if the search terms are to be changed via step 805. If changes, including additions, deletions, and modifications, to the search terms are inputted, then the changes are incorporated via step 807. A query is sent to the Internet via step 802, and the query results are returned via step 804. The query results are then displayed via step 806.

It is then determined if a save option has been selected via step 808. If not, it is determined if a cancel option has been selected via step 810. If a cancel option has not been selected, then it is again determined if a save option has been selected. If a save option has been selected via step 808, then the information is saved in the memory which is coupled to the TV via step 814.

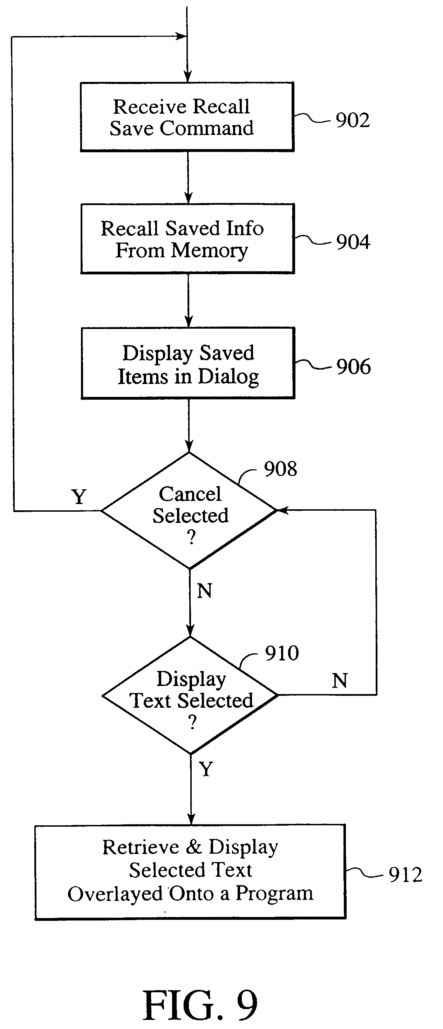

Figure 9 is a flow diagram of a method for recalling saved information derived from the Internet by using automatically generated search terms. A recall save command is received via step 902. Saved information from the memory is recalled via step 904. The saved items are displayed in a dialog, preferably overlaid onto a program on the television, via step 906.

It is then determined if a cancel option has been selected via step 908. If so, then the next recall save command can be processed when it occurs via step 902. If a cancel option has not been selected via step 908, then it is determined if any of the displayed items has been selected to view text associated with it via step 910. If not, it is again determined if a cancel option has been selected via step 908. If the display text option has been selected via step 910, then the selected text is retrieved and displayed, preferably overlaid onto the program, via step 912.

A method and system for interactively displaying program information on a television has been disclosed. Software written for such a system and method may be stored in some form of computer readable medium, such as memory or CD-ROM, or transmitted over a network, and executed by a processor.

## Claims

1. A method for interactively accessing program information on a television, the method comprising:
a) receiving a search request regarding a television program;
b) generating at least one automatic search term regarding the television program based upon the search request; and
c) searching an on-line service based upon the automatic search term for the requested information.

2. The method of claim 1, further comprising the step of incorporating changes to the at least one automatic search term.

3. The method of claim 2, wherein changes to the at least one automatic search term include adding or deleting a search term.

4. The method of any preceding claim, wherein the automatic search term is displayed on the television.

5. The method of claim 4, wherein the automatic search term is overlaid onto a current program on the television.

6. The method of any preceding claim, further comprising the step of displaying a list of at least one hit returned from the on-line search.

7. The method of claim 6, wherein the at least one hit is selectable to display text associated with it.

8. The method of any preceding claim, wherein the steps of the method are stopped when a cancel request is received.

9. The method of any preceding claim, wherein the at least one automatic search term is related to a current program on the television.

10. The method of any of claims 1-8, wherein the at least one automatic search term is related to a program to be received on a selected channel on the television.

11. The method of claim 10, wherein the selected channel is selected by tuning into the channel on the television.

12. The method of claim 10 or 11, wherein the at least one automatic search term is related to a program which will be received next on the selected channel on the television.

13. The method of any preceding claim wherein the on-line service is the Internet.

14. The method of any preceding claim, further comprising the initial step of displaying program information, wherein said search request is received responsive to said display of program information.

15. The method of claim 14, wherein the program information includes at least one of program name, program start time, program end time, a name of an actor acting in the program, and a name of a director who directed the program.

16. The method of claim 14 or 15, wherein the program information relates to the program which is currently playing on the channel being displayed.

17. The method of claim 14, 15, or 16, wherein the at least one automatic search term is based upon said program information.

18. The method of any preceding claim, wherein the requested information includes a program review.

19. The method of any preceding claim, wherein the search request is sent by selection of a key on a remote control.

20. The method of any preceding claim, further comprising the steps of:
obtaining a result of the search; and
saving the result in a memory coupled with the television.

21. The method of claim 20, further comprising the steps of retrieving and displaying the saved result from the memory.

22. The method of claim 20 or 21, further comprising the step of selecting the information to be saved.

23. A method for interactively displaying program information on a television, the method comprising:
receiving a search request regarding a television program;
displaying at least one search term overlaid onto a program being received by the television; and
searching an on-line service based upon the at least one search term for the requested information.

24. A system for interactively accessing program information on a television, the system comprising:
means for receiving a search request regarding a television program;
means for generating at least one automatic search term regarding the television program based upon the search request; and
means for searching an on-line service based upon the automatic search term for the requested information.

25. The system of claim 24, further comprising:
a television;
an input device for inputting information;
a receiver for receiving the information inputted from the input device;
an interface for accessing an on-line service; and
a controller coupled to the television, the receiver, and the interface for processing input inputted by the input device, said controller including the means for receiving a search request, the means for generating at least one automatic search term, and the means for searching.

26. A computer readable medium containing program instructions for interactively displaying program information on a television, the program instructions comprising:
a) receiving a search request regarding a television program;
b) generating at least one automatic search term regarding the television program based upon the search request; and
c) searching an on-line service based upon the automatic search term for the requested information.
